Europäisches Patentamt

European Patent Office

Office européen des brevets

(11) Publication number: **0 108 435**
**A1**

# (12) EUROPEAN PATENT APPLICATION

(21) Application number: 83201423.7

(22) Date of filing: 05.10.83

(51) Int. Cl.³: **G 05 D 9/12**
**G 01 F 23/22**

(30) Priority: 06.10.82 GB 8228569

(43) Date of publication of application:
16.05.84 Bulletin 84/20

(84) Designated Contracting States:
DE FR GB IT SE

(71) Applicant: KLIKLOK CORPORATION
10, Greenwich Plaza P.O. Box 621
Greenwich Connecticut 06836(US)

(72) Inventor: Sanders, Allan
55, Brummel Way
Paulton Bristol BS18 5XG(GB)

(74) Representative: Hulse, Thomas Arnold et al,
Hulse & Co. Cavendish Buildings West Street
Sheffield S1 1ZZ(GB)

(54) Hot liquid level control.

(57) Control means for the level of a hot liquid (1) in a chamber (2) comprises means (3) for supplying the liquid, a level probe (5) above the desired minimum level (7) and below the normal working level (8), a compensating probe (6) below the desired minimum level, probe circuits (9, 10) to produce signals proportional to temperatures of the probes, and a comparator circuit (11) for producing an output signal whenever the signal from the level probe circuit (9) falls below the signal from the compensating probe circuit (10) to actuate the means (3) for supplying the liquid, whereby level control is not dependent on temperature level, but on temperature difference, and so is reliable.

EP 0 108 435 A1

./...

Fig. 1

## HOT LIQUID LEVEL CONTROL

This invention relates to hot liquid level control, being particularly applicable to the control of the level of hot melt adhesive in a glue pot or in a chamber or reservoir supplying a glue pot. The term "hot" may include temperatures from as little as $10\,^{\circ}C$ above ambient temperature.

It is known to provide a pressure sensor probe having a dip tube extending into the chamber, with a low pressure and flow air supply to the dip tube and to one side of the diaphragm of a pressure amplifier, and with a sensor port of the pressure sensor probe connected to the other side of the diaphragm, movement of which is caused to actuate a switch connected to a pump for supplying hot melt adhesive in molten state to the chamber. The disadvantage with this form of liquid level control is the fineness to which the pressure and flow of the air supply have to be adjusted in order to ensure that the switch will be actuated when necessary or only when necessary to operate the pump.

It has been proposed to provide a float in the chamber with a diametral hole in the float by which it is guided on a tube depending from a removable cover for the chamber, and in which tube is located a proximity switch (e.g., a reed switch) operated by the float and connected to the pump for supplying hot melt adhesive in molten state to the chamber. The disadvantages with this form of liquid level control are that the movement of the float may be retarded by adhesive setting thereon and that the proximity switch is subjected to heat from the adhesive and therefore may not operate consistently and may eventually not operate at all.

An attempt has been made to overcome the latter disadvantage by mounting the float on one arm of a lever the other arm of which lies outside the chamber and carries a flag movable in relation to an inductive proximity switch in response to movement of the float, the switch being connected to the pump for supplying the adhesive to the chamber. Again, to avoid any moving parts whasoever in the chamber, it has been proposed to mount a field sensor probe with one end in the chamber and with the other end connected outside the chamber by a wire to a metal field transfer plate adjacent to a capacitive proximity switch connected to the pump. However, although the proximity switches in both cases are preferably in a separate housing or shroud, the proximity of an operator may be effective to actuate the switch and operate the pump other than when actually necessary.

It is known to determine the level of a hot liquid in a vessel by measuring the temperature at a plurality of vertically spaced points using thermocouples. However, as the output of any one thermocouple will vary with changes in the temperature of the hot liquid or consequent changes in the ambient temperature above the hot liquid (as well as with changes in the level) it is not possible to use the output of a thermocouple to actuate a switch for operating a pump for supplying liquid to the vessel to maintain a predetermined level with any reliability.

The object of the present invention is to overcome the above-mentioned disadvantages.

According to the present invention, control means for the level of a hot liquid in a chamber comprises means for supplying hot liquid to the chamber, a pair of temperature sensing probes, one being a level probe positioned in the chamber above the desired minimum liquid level and below the normal working liquid level, and the other being a compensating probe positioned in the chamber below the desired minimum liquid level, each probe being adapted to provide an electrical quantity proportional to temperature, a level probe circuit adapted to produce a signal proportional to the electrical quantity provided by the level probe, a compensating probe circuit adapted to produce a signal proportional to the electrical quantity provided by the compensating probe, and a comparator circuit adapted to receive and compare the signals from the level probe circuit and the compensating probe circuit and to produce an output signal whenever the signal from the level probe circuit falls below the signal from the compensating probe circuit, the output signal from the comparator circuit being adapted to actuate the means for supplying hot liquid to the chamber. Thus when the level probe is no longer immersed in the liquid an output signal from the comparator will actuate the means for supplying hot liquid to the chamber (which means may be a pump or a control valve) until the liquid level rises to cover the level probe, when the output signal from the comparator will be turned off and thus stops the supply of hot liquid to the chamber.

The probes may be thermocouples, in which case the probe circuits include amplifiers; or they may be thermistors, in which case the probe circuits include attenuators. In either case, the amplification or attentuation of the circuits is preferably arranged such that the signal from the level probe circuit is summed with a preset reference voltage which serves to raise the level probe signal above the compensating probe signal by a predetermined amount, to ensure that the level probe, when immersed in hot liquid at substantially the same temperature as at the compensating probe, will always cause the output from the comparator to turn off, thus switching off the supply of hot liquid to the chamber.

However, it should be noted that an output signal from the comparator is produced as a result of a difference between the temperatures of the probes and is not dependent on the level of temperature. Thus if the temperature of the hot liquid increases so too does the ambient temperature in the chamber above the liquid and the temperatures of both probes are correspondingly higher. If a difference exists (within a predetermined range) the means for supplying hot liquid will be actuated, if there is no difference no hot liquid will be supplied. It may be advantageous to provide for cooling of the upper regions of the chamber, as by a finned cover insulated from the chamber wall, or by coolant passages in a cover and/or in the upper wall of the chamber, to ensure a temperature differential between the probes.

Both probes may be mounted horizontally and parallel to each other, one vertically above the other, but it may be advantageious to incline the compensating probe downwards, to permit the system to operate over a greater range of liquid temperatures. The level probe is preferably mounted in an insulating bush in the chamber wall, so as to reduce the amount of heat

0108435

gained by the probe from the wall, and the sheath of the cable for the level probe acts as a thermal shunt, so as to reduce the probe sensitivity to air at the same temperature as the hot liquid, whereby the level probe circuit effects an output only when the level probe becomes immersed in the hot liquid or when it becomes uncovered. The compensating probe is preferably also mounted in an insulating bush in the chamber wall, so that it will be equally as sensitive to changes in liquid temperature as the level probe.

The signal from the compensating probe circuit is preferably fed to a voltage level detector and compared with a reference voltage set by means of a trimmer potentiometer in order to establish a minimum operating temperature threshold, thereby preventing actuation of the means for supplying hot liquid if for any reason the liquid level falls below the domain of the compensating probe or if the temperature of the liquid falls below a certain value, e.g. the temperature at which hot melt adhesive becomes molten. If, however, the compensating probe is not immersed in the liquid, actuation of the means for supplying hot liquid may be effected by means of a priming push-button, which will normally be connected in series with a low temperature interlock contact (e.g. part of a chamber temperature control system) to permit actuation only when the chamber and its contents are at a predetermined temperature; and the signal from the level probe is also fed to the voltage level detector.

To summarise, if the temperature of the liquid varies the level probe will always operate the level control since its temperature signal will vary in proportion to the temperature signal from the compensating probe and will return the same proportion of ON/OFF response to its non-immersed/immersed state.

The system is capable of operating over a range of liquid temperatures starting from a nominal 10°C above ambient to a maximum limited by the ability of the probes to function, normally limited to 200°C, but up to 1100°C if necessary, depending on choice of . probes. The amplifiers/attenuators are used to normalise the probe temperature proportional voltages or resistances to a working range of 0 to +5V D.C. so that the levels of temperature may be finally compared with one another by means of a solid state voltage level detector, the output of which is fed to a pump/valve command logic module.

An embodiment of the invention, and modifications thereof, will now be described, by way of example only, with reference to the accompanying drawings, in which:-

Figure 1 is a block circuit diagram of control means in accordance with the invention for the level of a hot liquid in a chamber;

Figure 2 is a vertical cross-section showing the detail of a chamber equipped with probes for use with the control means of Figure 1; and

Figure 3 corresponds to Figure 2 but shows a modification.

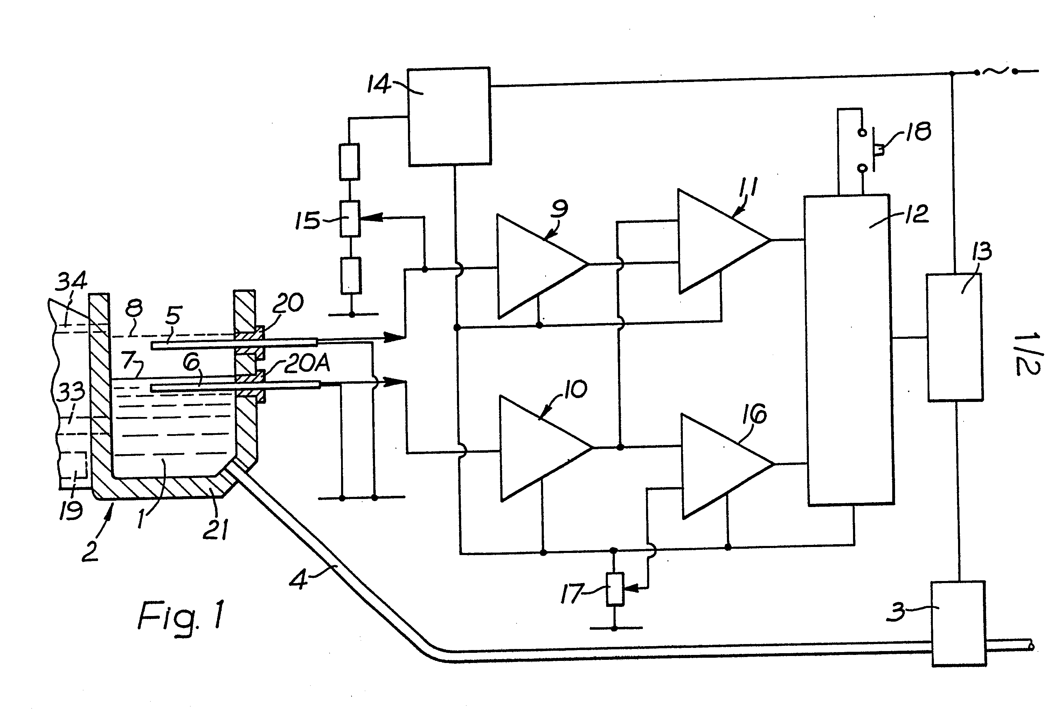

In Figure 1 control means for the level of a hot liquid 1 in a chamber 2 comprises a pump 3 for supplying hot liquid from a source (not shown) through a pipe 4 to the chamber, a pair of temperature sensing probes 5, 6, one being a level probe (5) positioned in the chamber above the desired minimum liquid level 7 and below the normal working level 8, and the other being a compensating probe (6) positioned in the chamber below the desired minimum liquid level, each probe being adapted to provide an electrical quantity proportional to temperature, a level probe circuit 9 adapted to produce a signal proportional to the electrical quantity provided by the level probe 5, a compensating probe circuit 10 adapted to produce a signal proportional to the electrical quantity provided by the compensating probe 6, and a comparator circuit 11 adapted to receive and compare the signals from the level probe circuit 9 and the compensating probe circuit 10 and to produce an output signal whenever the signal from the level probe circuit falls below the signal from the compensating probe circuit, the output signal from the comparator circuit 11 being adapted, by a pump command logic circuit 12 and output driver 13, to actuate the pump 3.

Thus, when the level probe 5 is no longer immersed in the liquid 1 an output signal from the comparator 11 will actuate the pump 3 until the liquid level rises to cover the level probe, when the output signal from the comparator will be turned off and thus stops the pump 3 from supplying hot liquid 1 to the chamber 2.

The output driver 13 operates on mains power (e.g. 110/220v at 50 Hz) while the rest of the circuitry operates on low voltage direct current (e.g. 15v) supplied through a converter and control circuit 14.

The probes 5, 6 may be thermocouples in which case the probe circuits 9, 10 include amplifiers; or they may be thermistors, in which case the probe circuits 9, 10 include attenuators. In either case, the signal from the level probe circuit 9 is summed with a preset reference voltage from a potentiometer 15 to raise the level probe signal above the compensating probe signal by a predetermined amount, to ensure that the level probe 5, when immersed in the hot liquid 1 at substantially the same temperature as at the compensating probe 6, will always cause the output from the comparator 11 to turn off, thus switching off the supply of hot liquid by stopping the pump 3.

Because an output signal from the comparator 11 results from a difference between the temperatures of the probes 5, 6 and is not dependent on the level of temperature, if the temperature of the hot liquid 1 increases so too does the ambient temperature in the chamber 2 above the liquid and the temperatures of both probes are correspondingly higher, and so long as a difference exists the pump 3 will be actuated, but if there is no difference no hot liquid will be suipplied.

The signal from the compensating probe circuit 10 is fed to a voltage level detector 16 and compared with a reference voltage set by means of a trimmer potentiometer 17 in order to establish a minimum operating temperature threshold, thereby preventing actuation of the pump if for any reason the liquid level 7 falls below the domain of the compensating probe 6 or if the temperature falls below a certain value, e.g. the temperature at which hot melt adhesive becomes molten. If, however, the compensating probe 6 is not immersed in the liquid 1, actuation of the pump 3 may be effected by means of a priming push-button 18 (which will normally be connected in series with a low temperature interlock contact - not shown - forming part of a chamber temperature control system 19) to permit actuation only when the chamber 2 and its contents are at a predetermined temperature; and the signal from the level probe 5 is also fed to the voltage level detector 16.

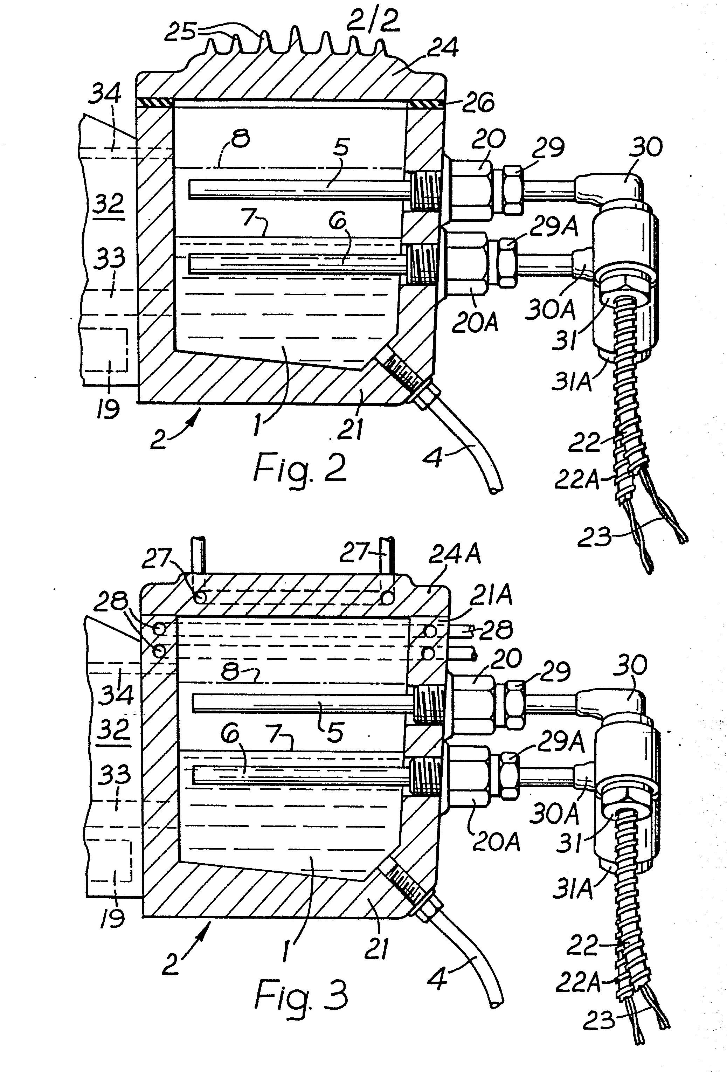

Both probes are mounted horizontally and are parallel to each other, one vertically above the other, and - as can be also be seen in Figures 2 and 3 - the level probe 5 is mounted in an insulating bush 20 in the chamber wall 21, so as to reduce the amount of heat gained by the probe from the wall, and the sheath 22 of the cable 23 for the level probe acts as a thermal shunt, so as to reduce the probe sensitivity to air at the same temperature as the hot liquid 1, whereby the level probe circuit 9 effects an output only when the level probe becomes immersed in the hot liquid or when it becomes uncovered. The compensating probe 6 is also mounted in an insulating bush 20A in the chamber wall 21, so that it will be equally sensitive to changes in liquid temperature as the level probe.

It may be advantageous to provide for cooling of the upper regions of the chamber 2, to ensure a temperature differential between the probes 5, 6. Thus in Figure 2 a cover 24 for the chamber 2 has cooling fins 25 and is separated from the chamber wall by an insulating gasket 26, while in Figure 3 coolant passages 27, 28 are shown in respectively the cover 24A and the upper wall 21A of the chamber.

Figures 2 and 3 also show gland nuts 29, 29A by means of which the probes 5, 6 respectively are secured in their respective insulating bushes 20, 20A after adjusting the extent to which they project into the chamber 2, with elbow bends 30, 30A for protecting the cables, and securing nuts 31, 31A for the cable sheaths 22, 22A.

Figures 1 to 3 also indicate the chamber 2 as being a reservoir for a device 32 using the hot liquid 1, e.g. a hot adhesive applicator, with a supply passage 33 from the chamber and a return or overflow passage 34 back to the chamber, the body of the device 32 also housing the temperature control system 19 for the chamber (and, of course, the device 32).

CLAIMS

1. A control means for the level of a hot liquid (1) in a chamber (2) comprising means (3) for supplying hot liquid to the chamber, a pair of temperature sensing probes (5, 6), one being a level probe (5) positioned in the chamber (1) above the desired minimum liquid level (7) and below the normal working liquid level (8), and the other being a compensating probe (6) positioned in the chamber below the desired minimum liquid level (7), each probe being adapted to provide an electrical quantity proportional to temperature, a level probe circuit (9) adapted to produce a signal proportional to the electrical quantity provided by the level probe (5), a compensating probe circuit (10) adapted to produce a signal proportional to the electrical quantity provided by the compensating probe (6), and a comparator circuit (11) adapted to receive and compare the signals from the level probe circuit (9) and the compensating probe circuit (10) and to produce an output signal whenever the signal from the level probe circuit falls below the signal from the compensating probe circuit, the output signal from the comparator circuit (11) being adapted to actuate the means (3) for supplying hot liquid (1) to the chamber (2).

2. Control means as in Claim 1, wherein the probes (5, 6) are thermocouples and the probe circuits (9, 19) include amplifiers.

3. Control means as in Claim 1, wherein the probes (5, 6) are thermistors and the probe circuits (9, 10) include attenuators.

4. Control means as in any one of Claims 1 to 3, wherein the signal from the level probe circuit (9) is summed with a preset reference voltage (15) which serves to raise the level probe signal above the compensating probe signal by a predetermined amount.

5. Control means as in any one of Claims 1 to 4, wherein means (25 or 27 and/or 28) is provided for cooling of the upper regions of the chamber (2) to ensure a temperature differential between the probes (5, 6).

6. Control means as in any one of Claims 1 to 5, wherein both probes (5, 6) are mounted horizontally and are parallel to each other, one vertically above the other.

7.    Control means as in any one of Claims 1 to 5, wherein the level probe (5) extends horizontally, while the compensating probe (6) is inclined downwards.

8.    Control means as in any one of Claims 1 to 7, wherein the level probe (5) is mounted in an insulating bush (20) in the chamber wall (21), and the sheath (22) of the cable (23) for the level probe acts as a thermal shunt.

9.    Control means as in Claim 8, wherein the compensating probe (6) is also mounted in an insulating bush (20A) in the chamber wall 21.

10.    Control means as in any one of Claims 1 to 9, wherein the signal from the compensating probe circuit (10) is fed to a voltage level detector (16) and compared with a reference voltage set by means of a trimmer potentiometer (17) in order to establish a minimum operating temperature threshold.

11.    Control means as in Claim 10, wherein a priming push-button (18) is provided

0108435

for actuation of the means (3) for supplying hot liquid (1).

12. Control means as in Claim 11, wherein the priming push-button (18) is connected in series with a low temperature interlock contact (19).

Fig. 1

1/2

0108435

0108435

Fig. 2

Fig. 3

0108435

European Patent
Office

**EUROPEAN SEARCH REPORT**

Application number

EP 83 20 1423

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | Patent Abstracts of Japan Vol. 4, no. 74, 30 May 1980 Page 42 P 13 & JP-A-55-39954 * Whole abstracts * | 1,2,4 | G 05 D 9/12 G 01 F 23/22 |
| Y | DE-A-2 155 926 (USS ENGINEERS & CONSULTANTS INC.) * Pages 1, 2; figure 2; claim 1 * | 1,2,4 | |
| A | DE-A-1 946 484 (OY E. SARLIN AB) * Page 2, paragraph 3 * | 1 | |
| A | CRYOGENICS, vol. 20, no. 2, 1980 A.K. PAL et al. "A liquid nitrogen two-level controller of new design", pages 108-109 * Page 108, line 3 * | 3 | TECHNICAL FIELDS SEARCHED (Int. Cl. ³)  G 05 D 9/00 G 01 F 23/00 |

The present search report has been drawn up for all claims

| Place of search BERLIN | Date of completion of the search 05-01-1984 | Examiner BEYER F |
|---|---|---|

EPO Form 1503. 03.82